# EUROPEAN PATENT APPLICATION

(11) **EP 1 376 588 A2**
(43) Date of publication of application: **02.01.2004**
(21) Application number: 03008471.9
(22) Date of filing: 11.04.2003
(51) Int. Cl.: G11B 27/32, G11B 20/12, G11B 20/10

(54) **Method and apparatus for recording text data**

(30) Priority: 26.06.2002 JP 2002186664
(71) Applicant: Victor Company of Japan, Ltd., Yokohama 221-0022 (JP)
(72) Inventor: Fuchigami, Norihiko, Kamakura-shi, Kanagawa-ken (JP)
(74) Representative: Manitz, Finsterwald & Partner GbR

(57) **Abstract**

First text data relating to audio data and being non-copyrighted, a flag representing that the first text data are non-copyrighted, an information piece representing a character code used for the first text data, and an information piece representing a size of the first text data are formed into a first text block. Second text data relating to the audio data and being copyrighted, a flag representing that the second text data are copyrighted, an information piece representing a character code used for the second text data, and an information piece representing a size of the second text data are formed into a second text block. An item text is generated which includes at least one of the first and second text blocks. A text-data management structure is generated which includes the item text. The text-data management structure is recorded on an audio disc.

## Description

### BACKGROUND OF THE INVENTION

### Field of the Invention

This invention relates to a method of recording text data, and also an apparatus for recording text data. In addition, this invention relates to an audio disc, a computer program, and an apparatus for reproducing information from an audio disc.

### Description of the Related Art

There are MDs (Mini Discs) each capable of storing high-tone-quality audio data representative of music having a playback time in the range of 74 to 120 minutes. An MD is of a structure which can store a text representative of a disc name or tune names. The MD can not store another text, for example, a text representative of a tune genre or an input source.

There are DVD-RW discs and DVD-RAM discs. The VIDEO RECORDING standards (DVD-VR standards) prescribe the format of recording video data on a DVD-RW disc or a DVD-RAM disc.

According to the DVD-VR standards, video data are recorded on a disc as video objects (VOBs). The disc is also loaded with original management data and user defined management data. The original management data represent an original PGC (program chain) used for sequentially reproducing VOBs from the disc in an order equal to that of recording of the VOBs on the disc. The user defined management data represent a user defined PGC or PGCs. Each user defined PGC relates to ones among the VOBs and portions of the VOBs which are selected by a user. The user defined PGC is used for sequentially reproducing the selected VOBs and the selected portions of the VOBs in an order desired by the user. On each disc, there is only one original PGC and one or more user defined PGCs. It should be noted that a user defined PGC may be called "Play List" since it defines a playback sequence list that picks up part of the data in the original PGC.

The DVD-VR standards are unsuited for the recording of only audio data on a disc. According to the DVD-VR standards, it is mandatory that each VOB contains a video stream. Thus, it is difficult to record only audio data on a disc. Regarding audio data, the DVD-VR standards support only 2-channel linear PCM audio data and compressed audio data. The DVD-VR standards do not support high-quality linear PCM audio data having more than 2 channels.

Japanese patent application publication number P2002-133830A discloses a recording disc storing audio data and text data on a DVD-RW disc or a DVD-RAM disc. Specifically, the recording disc in Japanese application P2002-133830A stores text data indicative of a main genre of the music contents represented by the audio data, and also text data indicative of a sub genre of the music contents. The main genre and the sub genre can be defined by a user. The main genre and the sub genre are in a hierarchical structure such that the sub genre is subordinate to the main one.

### SUMMARY OF THE INVENTION

It is a first object of this invention to provide a method of recording text data which can unitarily manage text data fed from various sources together with audio data.

It is a second object of this invention to provide an apparatus for recording text data which can unitarily manage text data fed from various sources together with audio data.

It is a third object of this invention to provide an improved audio disc.

It is a fourth object of this invention to provide an improved computer program.

It is a fifth object of this invention to provide an improved apparatus for reproducing information from an audio disc.

A first aspect of this invention provides a text-data recording apparatus comprising first means for forming 1) first text data relating to audio data and being non-copyrighted, 2) a flag representing that the first text data are non-copyrighted, 3) an information piece representing a character code used for the first text data, and 4) an information piece representing a size of the first text data into a first text block; second means for forming 1) second text data relating to the audio data and being copyrighted, 2) a flag representing that the second text data are copyrighted, 3) an information piece representing a character code used for the second text data, and 4) an information piece representing a size of the second text data into a second text block; third means for generating an item text including at least one of the first and second text blocks generated by the first and second means; fourth means for generating a text-data management structure including the item text generated by the third means; and fifth means for recording the text-data management structure generated by the fourth means on an audio disc.

A second aspect of this invention is based on the first aspect thereof, and provides a text-data recording apparatus further comprising means provided in the fifth means for recording the first text block before recording the second text block in cases where the item text includes both the first and second text blocks.

A third aspect of this invention is based on the first aspect thereof, and provides a text-data recording apparatus further comprising means for encrypting the second text block into an encryption-resultant version, and means provided in the fifth means for recording the second text block of the encryption-resultant version on the audio disc.

A fourth aspect of this invention provides an audio disc storing audio data and a text-data management structure in the first aspect of this invention.

A fifth aspect of this invention provides a method of recording text-data. The method comprises the steps of forming 1) first text data relating to audio data and being non-copyrighted, 2) a flag representing that the first text data are non-copyrighted, 3) an information piece representing a character code used for the first text data, and 4) an information piece representing a size of the first text data into a first text block; forming 1) second text data relating to the audio data and being copyrighted, 2) a flag representing that the second text data are copyrighted, 3) an information piece representing a character code used for the second text data, and 4) an information piece representing a size of the second text data into a second text block; generating an item text including at least one of the first and second text blocks; generating a text-data management structure including the item text; and recording the text-data management structure on an audio disc.

A sixth aspect of this invention provides a computer program for recording text-data. The computer program comprises the steps of forming 1) first text data relating to audio data and being non-copyrighted, 2) a flag representing that the first text data are non-copyrighted, 3) an information piece representing a character code used for the first text data, and 4) an information piece representing a size of the first text data into a first text block; forming 1) second text data relating to the audio data and being copyrighted, 2) a flag representing that the second text data are copyrighted, 3) an information piece representing a character code used for the second text data, and 4) an information piece representing a size of the second text data into a second text block; generating an item text including at least one of the first and second text blocks; generating a text-data management structure including the item text; and recording the text-data management structure on an audio disc.

A seventh aspect of this invention provides an apparatus for reproducing at least one of first and second text blocks from an audio disc recited in the fourth aspect of this invention.

An eighth aspect of this invention provides an apparatus comprising first means for deciding whether or not text data relating to audio data are copyrighted, and generating a first signal representing a result of said deciding; second means for deciding a character code set expressing the text data, and generating a second signal representing the decided character code set; third means for formatting 1) the text data, 2) the first signal generated by the first means, and 3) the second signal generated by the second means into a text-data management structure; and fourth means for recording the text-data management structure generated by the third means on an audio-data recording disc.

### BRIEF DESCRIPTION OF THE DRAWINGS

Fig. 1 is a diagram of the structure of directories and files on a background-art recording disc which is prescribed by the DVD-VR standards.
Fig. 2 is a diagram of the details of a text data manager TXTDT_MG.
Fig. 3 is a diagram of a first form of one information piece indicating one item text IT_TXT in Fig. 2.
Fig. 4 is a diagram of a second form of one information piece indicating one item text IT_TXT in Fig. 2.
Fig. 5 is a diagram of a third form of one information piece indicating one item text IT_TXT in Fig. 2.
Fig. 6 is a diagram of the relation among ID code numbers (ID code words), item types, and item names which is prescribed by the DVD-VR standards.
Fig. 7 is a diagram of a specific example of the details of one information piece indicating one item text IT_TXT in Fig. 2.
Fig. 8 is a diagram of the details of original PGC information (original PGCI) being data representing an original PGC.
Fig. 9 is a diagram of the structure of directories and files on a DVD-AR disc according to an embodiment of this invention.
Fig. 10 is a diagram of a specific example of an item-text structure (IT_TXT structure), that is, the structural details of one information piece indicating one item text IT_TXT in the embodiment of this invention.
Fig. 11 is a diagram of a specific example of the details of one data segment representing one text category TXT_CAT in Fig. 10.
Fig. 12 is a block diagram of a text-data recording apparatus in the embodiment of this invention.
Fig. 13 is a flowchart of a segment of a control program for a main controller in Fig. 12.
Fig. 14 is a block diagram of a text-data reproducing apparatus in the embodiment of this invention.

### DETAILED DESCRIPTION OF THE INVENTION

Background art will be explained below for a better understanding of this invention.

"DVD Specifications for Rewritable/Re-recordable Discs, Part 3 VIDEO RECORDING, Version 1.0" which are copy-protected indicate that a plurality of files are recorded on a DVD-RW disc or a DVD-RAM disc in conformity with the DVD-VR standards.

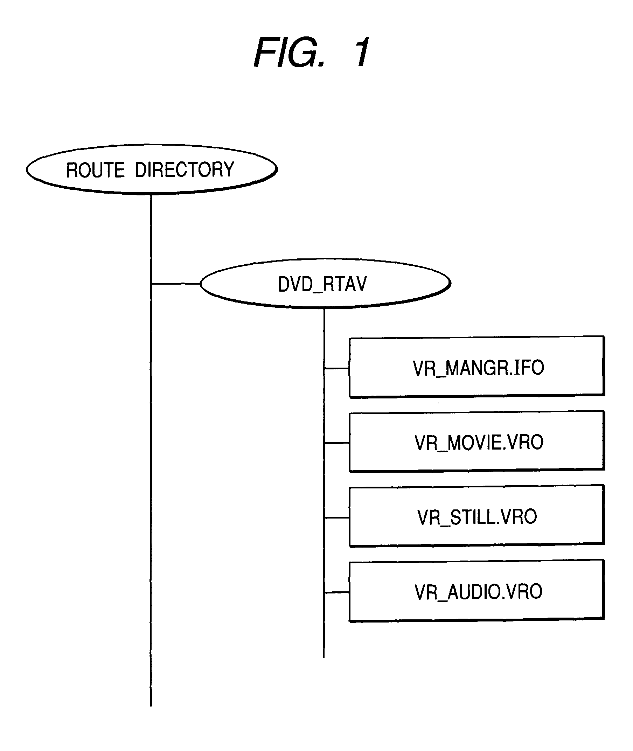

Fig. 1 shows the structure of directories and files on a disc which is prescribed by the DVD-VR standards. As shown in Fig. 1, the DVD-VR disc has a route directory under which a DVD_RTAV directory is placed as a sub directory. The DVD_RTAV directory contains a VR_MANGR.IFO file for storing all recording and reproducing management data including data representative of an original PGC (program chain) and data representative of a user defined PGC or PGCs.

The DVD_RTAV directory further contains a VR_MOVIE.VRO file, a VR_STILL.VRO file, and a VR_AUDIO.VRO file. Video data are stored in the VR_MOVIE.VRO file as video objects (VOBs). Still-picture data, that is, data representing still pictures, are stored in the VR_STILL.VRO file. Additional audio data related to the still pictures are stored in the VR_AUDIO.VRO file. In this way, the contents data (including the video data, the still-picture data, and the additional audio data) and the recording and reproducing management data are separately recorded on the disc on a file-by-file division basis. Thus, the order of reproducing the contents data can be decided by the user defined PGC or PGCs while the contents data remain unchanged.

The VR_MANGR.IFO file includes a text data manager (text data management structure) TXTDT_MG representing the type of the contents recorded on the disc. The type of the contents is determined by the genre of the contents and the source providing the contents.

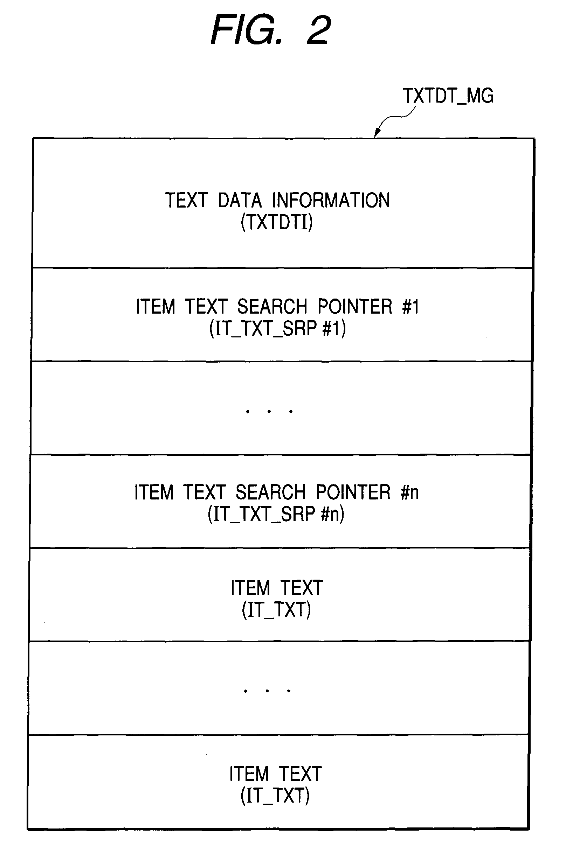

Fig. 2 shows the details of the text data manager TXTDT_MG. As shown in Fig. 2, the text data manager TXTDT_MG has text data information TXTDTI, information pieces indicative of item text search pointers IT_TXT_SRP# 1, #2, ···, and #n, and information pieces indicative of item texts IT_TXT. The text data information TXTDTI is followed by the information pieces indicative of the item text search pointers IT_TXT_SRP# 1, #2, ···, and #n. The information pieces indicative of the item text search pointers IT_TXT_SRP#1, #2, ···, and #n are followed by the information pieces indicative of the item texts IT_TXT. There may be only one item text search pointer IT_TXT_SRP and only one item text IT_TXT.

There are items in the contents represented by the video data. The item texts IT_TXT relate to the respective items in the contents.

The text data information TXTDTI has an information piece indicating a designated character code set, and an information piece indicating the number "n" of the item text search pointers IT_TXT_SRP# 1, #2, ···, and #n. The item text search pointers IT_TXT_SRP#1, #2, ···, and #n are assigned to the item texts IT_TXT, respectively. Each of the item text search pointers IT_TXT_SRP# 1, #2, ···, and #n indicates the size of the corresponding item text IT_TXT, and an address of the head of the corresponding item text IT_TXT which is determined as viewed from the head of the text data manager TXTDT_MG.

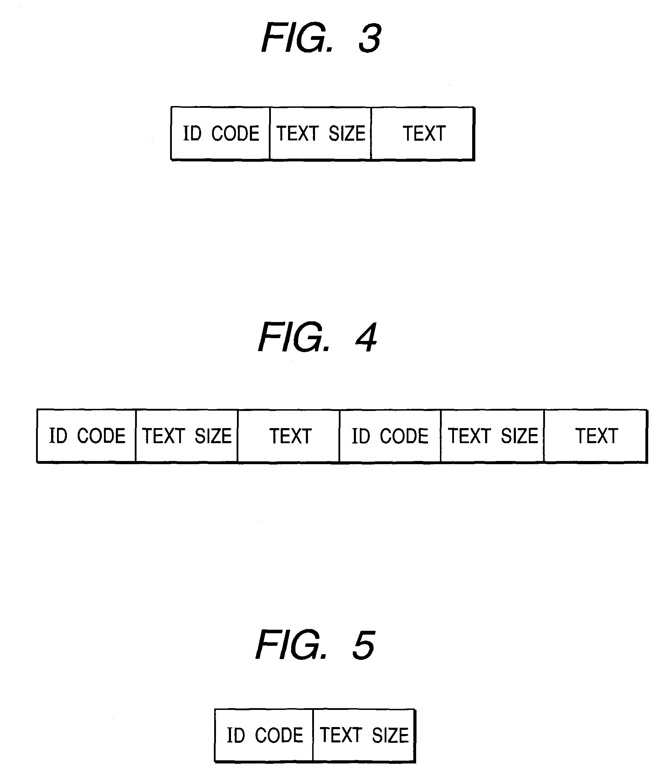

Each information piece indicating an item text IT_TXT can be changed among different forms including those shown in Figs. 3, 4, and 5.

Fig. 3 shows a first form of one information piece indicating one item text IT_TXT. According to the form in Fig. 3, one IT_TXT information piece has a first segment representing a word of an ID (identification) code, a second segment representing the size of a text, and a third segment representing the text. The text means a set of letters and characters. Generally, the size of the text means the total number of letters and characters composing the text.

Fig. 4 shows a second form of one information piece indicating one item text IT_TXT. According to the form in Fig. 4, one IT_TXT information piece has a first segment representing a first ID code word, a second segment representing the size of a first text, a third segment representing the first text, a fourth segment representing a second ID code word, a fifth segment representing the size of a second text, and a sixth segment representing the second text. The size of the first text and the size of the second text may be set to "0" (in letter and character number).

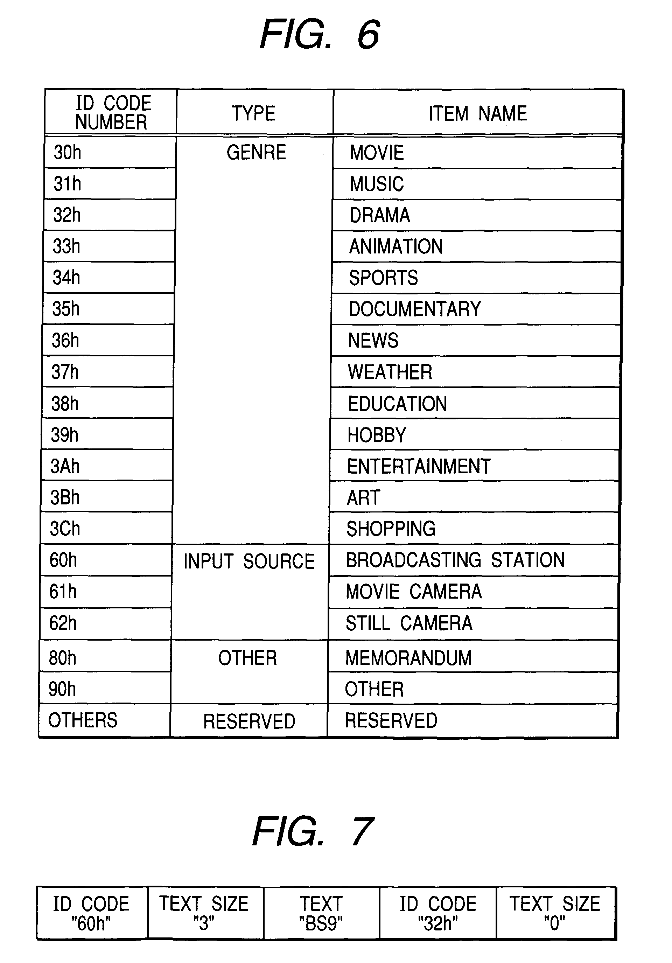

Fig. 6 shows a third form of one information piece indicating one item text IT_TXT. According to the form in Fig. 6, one IT_TXT information piece has only a first segment representing an ID code word, and a second segment representing the size of a text which is set to "0". The text size being "0" denotes the absence of the text.

According to the DVD-VR standards, different words of the ID code are assigned to different item names respectively. The item names are separated into a first group (first type) corresponding to the genre of the item, a second group (second type) corresponding to the source providing the item, and a third group (third type) corresponding to another matter.

Fig. 6 shows the relation among the ID code numbers (ID code words), the item types, and the item names which is prescribed by the DVD-VR standards. As shown in Fig. 6, an ID code number "30h" is assigned to an item name "movie" which is in the item-genre group. An ID code number "31h" is assigned to an item name "music" which is in the item-genre group. An ID code number "32h" is assigned to an item name "drama" which is in the item-genre group. An ID code number "33h" is assigned to an item name "animation" which is in the item-genre group. An ID code number "34h" is assigned to an item name "sports" which is in the item-genre group. An ID code number "35h" is assigned to an item name "documentary" which is in the item-genre group. An ID code number "36h" is assigned to an item name "news" which is in the item-genre group. An ID code number "37h" is assigned to an item name "weather" which is in the item-genre group. An ID code number "38h" is assigned to an item name "education" which is in the item-genre group. An ID code number "39h" is assigned to an item name "hobby" which is in the item-genre group. An ID code number "3Ah" is assigned to an item name "entertainment" which is in the item-genre group. An ID code number "3Bh" is assigned to an item name "art" which is in the item-genre group. Here, "art" means "theatrical performance" or "opera". An ID code number "3Ch" is assigned to an item name "shopping" which is in the item-genre group. An ID code number "60h" is assigned to an item name "broadcasting station" which is in the item-source group. An ID code number "61h" is assigned to an item name "movie camera" which is in the item-source group. An ID code number "62h" is assigned to an item name "still camera" which is in the item-source group. An ID code number "80h" is assigned to an item name "memorandum" which is in the item-other-matter group.

Fig. 7 shows a specific example of the details of one information piece indicating one item text IT_TXT. In Fig. 7, one IT_TXT information piece has a first segment representing an ID code word of "60h", a second segment representing an item-text size of "3", a third segment representing a text of "BS9", a fourth segment representing an ID code word of "32h", and a fifth segment representing a text size of "0". The item text IT_TXT in Fig. 7 indicates that the related item is a drama broadcasted by a station assigned to a channel of "BS9".

The item texts IT_TXT are linked with the original PGC and the user defined PGC or PGCs. In connection with the data playback from the disc according to the original PGC or the user defined PGC, the linked item texts can be indicated. For example, during the data playback from the disc according to the original PGC or the user defined PGC, the item texts IT_TXT linked therewith are detected and selected before being indicated on a display of a disc player.

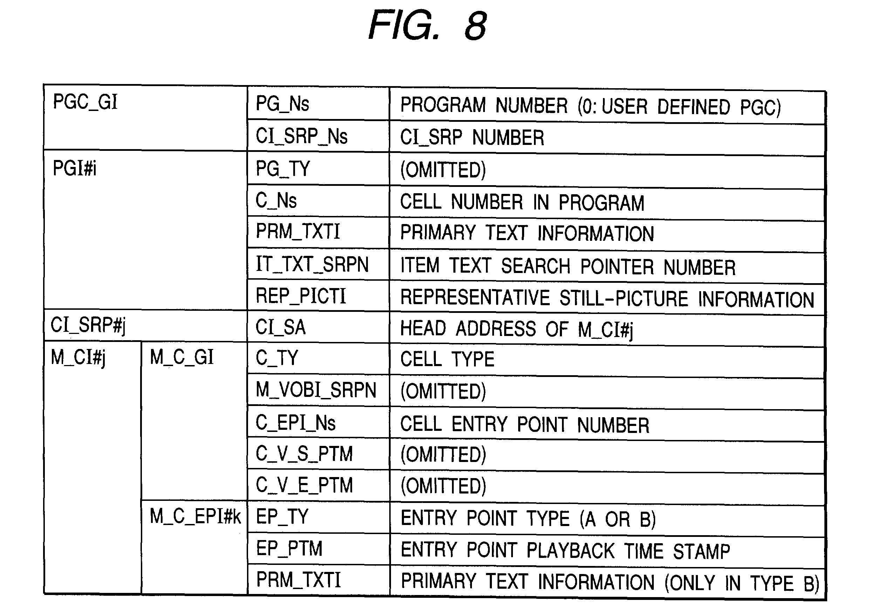

Fig. 8 shows the details of original PGC information (original PGCI) being data representing an original PGC. As shown in Fig. 8, the original PGCI has general information PGC_GI of the original PGC, one or more attached information pieces PGI#i of respective related programs (programs in the contents), search pointers CI_SRP#j for cell information pieces in the original PGC, and cell information pieces M_CI#j of the respective related cells corresponding to moving pictures. The cell information pieces M_CI#j may be replaced by cell information pieces S_CI#j of the respective related cells corresponding to still pictures.

There is user defined PGC information (user defined PGCI) being data representing a user defined PGC. The structure of the user defined PGCI is basically similar to that of the original PGCI in Fig. 8. Specifically, the user defined PGCI has general information PGC_GI of the user defined PGC, search pointers CI_SRP#j for cell information pieces in the user defined PGC, and cell information pieces M_CI#j of the respective related cells corresponding to moving pictures. The cell information pieces M_CI#j may be replaced by cell information pieces S_CI#j of the respective related cells corresponding to still pictures. Generally, attached information pieces PGI#i (see Fig. 8) are absent from the user defined PGCI.

Regarding each of the original PGCI and the user defined PGCI, the PGC general information PGC_GI contains an information piece representing the number PG_Ns of the programs in the related PGC, and an information piece representing the number CI_SRP_Ns of the search pointers CI_SRP#j. In the case of the user defined PGCI, the program number PG_Ns is equal to zero since a program is absent from the user defined PGC. The number of the attached information pieces PGI#i is equal to the program number PG_Ns. Thus, the variable "i" changes in the range as 1 ≦ i ≦ PG_Ns. Each attached information piece PGI#i contains a data piece representing the number C_Ns of cells in the related program, a data piece representing primary text information PRM_TXTI related to the program, a data piece representing a search pointer number IT_TXT_SRPN for item text information related to the program, and a data piece indicating representative still-picture information REP_PICTI for designating the position of a still picture representative of the program. The item text information is stored in a data structure within the VR_MANGR.IFO file which is separate from the original PGCI.

The number of the search pointers CI_SRP#j is equal to the number CI_SRP_Ns. Thus, the variable "j" changes in the range as 1 ≦j ≦ CI_SRP_Ns. Each search pointer CI_SRP#j has a data piece representing a head address CI_SA of the related cell information piece CI. Each cell information piece M_CI#j has data representing cell general information M_C_GI, and data representing one or more cell entry point information pieces M_C_EPI#k. The cell general information M_C_GI contains a data piece representing the type C_TY of the related cell, and a data piece representing the number C_EPI_Ns of cell entry points. Each cell entry point information piece M_C_EPI#k contains a data piece representing the type EP_TY of the related entry point, a data piece representing the playback time point (the playback time stamp) EP_PTM of the related entry point, and a data piece representing primary text information PRM_TXTI related to the entry point. The entry point type EP_TY can be changed between first one "A" void of primary text information PRM_TXTI and second one "B" having primary text information PRM_TXTI.

In the case of an original PGCI, specified one among item text search points IT_TXT_SRP#1, #2, ··· in a text data manager TXTDT_MG can be designated by a search pointer number IT_TXT_SRPN in each attached information piece PGI#i.

The DVD-VR standards are unsuited for the recording of only audio data on a disc. According to the DVD-VR standards, it is mandatory that each VOB contains a video stream. Thus, it is difficult to record only audio data on a disc. Regarding audio data, the DVD-VR standards support only 2-channel linear PCM audio data and compressed audio data. The DVD-VR standards do not support high-quality linear PCM audio data having more than 2 channels.

Therefore, to mainly record audio data on a DVD-RW disc or a DVD-RAM disc, it is necessary to provide a new method. Here, a conceivable DVD disc designed for mainly storing audio contents is referred to as a DVD audio recording disc (DVD-AR disc). In an assumed case where a DVD-RW disc or a DVD-RAM disc is designed for not only use as a DVD-VR disc but also use as a DVD-AR disc, an important point to be considered is as follows. A common drive apparatus is assumed which supports both a DVD-VR disc and a DVD-AR disc. To make a greater part of the apparatus common to a DVD-VR disc and a DVD-AR disc, it is desirable that the data structures of the DVD-VR disc and the DVD-AR disc are similar to each other to a higher degree.

The assignment of the ID code numbers (ID code words) to the item names in the item-genre group in Fig. 6 is designed for video use, and has single-layer structure. The assignment in Fig. 6 is unsuited for audio use due to a point as follows. In general, the audio genre is selected from "pops", "rock-and-roll", "jazz", "fusion", "classical", and others. In some cases, it is desirable to provide a sub genre under a main genre. For example, when the main genre is "classical", the sub genre is selected from "symphony", "concerto", "chamber music", "piano solo", and others. The main / sub genre arrangement requires a hierarchical structure or a multi-layer structure. As previously mentioned, the assignment in Fig. 6 has a single-layer structure. Therefore, the assignment in Fig. 6 can not be properly diverted to audio use.

The DVD-VR standards premise that each item text IT_TXT is inputted by a user or automatically generated by a recording device. The DVD-VR standards fail to consider the recording of a copyrighted text fed by a contents provider.

Electronic music distribution (EMD) systems are provided on the Internet. Audio data can be downloaded into personal computers from the EMD systems via the Internet. Regarding the recording of audio contents with texts, it is desirable to distinguish between a copyrighted text fed by an EMD-based contents provider and a non-copyrighted text (free text) inputted by a user.

According to the DVD-VR standards, only one character code set can be designated with respect to all item texts IT_TXT on a disc. On the other hand, it is desirable to use different character code sets for an item text inputted by a user and an item text fed by an EMD-based contents provider, respectively.

### Embodiment

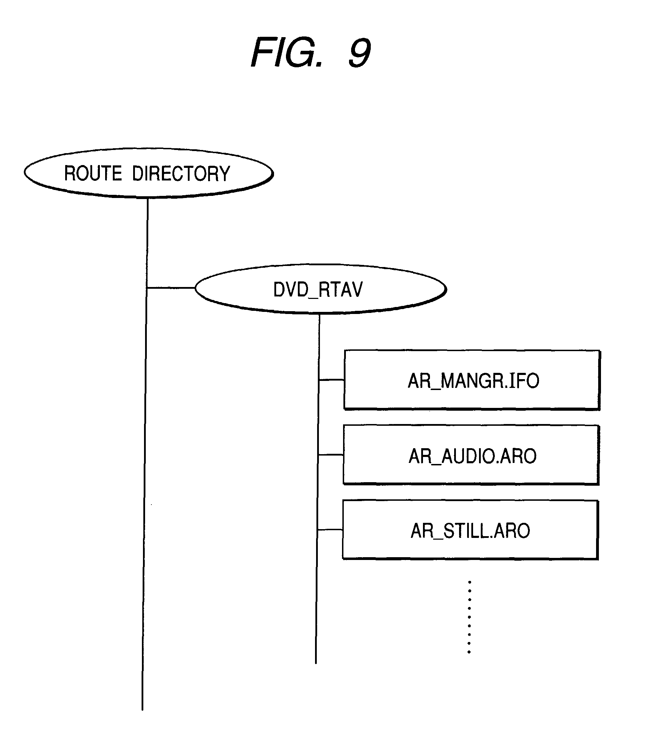

Fig. 9 shows the structure of directories and files on a DVD-AR disc according to an embodiment of this invention. The DVD-AR disc means a DVD audio recording disc, that is, a DVD disc designed for mainly storing audio contents. The DVD-AR disc is a modification of a DVD-VR disc. The DVD-AR disc is quite analogous to a DVD-VR disc. As shown in Fig. 9, the DVD-AR disc has a route directory under which a DVD_RTAV directory is placed as a sub directory. The DVD_RTAV directory contains an AR_MANGR.IFO file for storing all recording and reproducing management data including data representative of an original PGC (program chain) and data representative of a user defined PGC or PGCs. It should be noted that a user defined PGC may be called "Play List" since it defines a playback sequence list that picks up part of the data in the original PGC.

The DVD_RTAV directory further contains an AR_AUDIO.ARO file and an AR_STILL.ARO file. Audio data are stored in the AR_AUDIO.ARO file as audio objects (AOBs) corresponding to VOBs in a DVD-VR disc. Still-picture data (data representing still pictures) are stored in the AR_STILL.ARO file. The AR_MANGR.IFO file, the AR_AUDIO.ARO file, and the AR_STILL.ARO file correspond to the VR_MANGR.IFO file, the VR_MOVIE.VRO file, and the VR_STILL.VRO file in a DVD-VR disc, respectively. Since the recording and reproducing management data, the audio data, and the still-picture data are stored in files under the DVD_RTAV directory similar to that in a DVD-VR disc, it is easy to determine the relation between DVD-AR contents data and DVD-VR contents data. In this way, the contents data (including the audio data and the still-picture data) and the recording and reproducing management data are separately recorded on the disc on a file-by-file division basis. Thus, the order of reproducing the contents data can be decided by the user defined PGC or PGCs while the contents data remain unchanged.

The original PGC is used for sequentially reproducing AOBs from the disc in an order equal to that of the recording of the AOBs on the disc. Each user defined PGC relates to ones among the AOBs and portions of the AOBs which are selected by a user. The user defined PGC is used for sequentially reproducing the selected AOBs and the selected portions of the AOBs in an order desired by the user.

It is preferable that similar to the VR_MANGR.IFO file in a DVD-VR disc, the AR_MANGR.IFO file includes a text data manager (text data management structure) TXTDT_MG representing the type of the contents recorded on the disc. The type of the contents is determined by the genre of the contents and the source providing the contents. The genre of the contents includes a main genre and a sub genre in a hierarchical structure (multi-layer structure). The sub genre is defined under the main genre. In other words, the sub genre is subordinate to the main genre. Preferably, the text data manager TXTDT_MG has a structure basically similar to that in Fig. 2.

Thus, it is preferable that the text data manager TXTDT_MG has text data information TXTDTI, information pieces indicative of item text search pointers IT_TXT_SRP#1, #2, ···, and #n, and information pieces indicative of item texts IT_TXT (see Fig. 2).

It should be noted that information pieces indicative of item texts IT_TXT may be placed in a text-only file or a text exclusive file on the disc which is separate from the AR_MANGR.IFO file, the AR_AUDIO.ARO file, and the AR_STILL.ARO file.

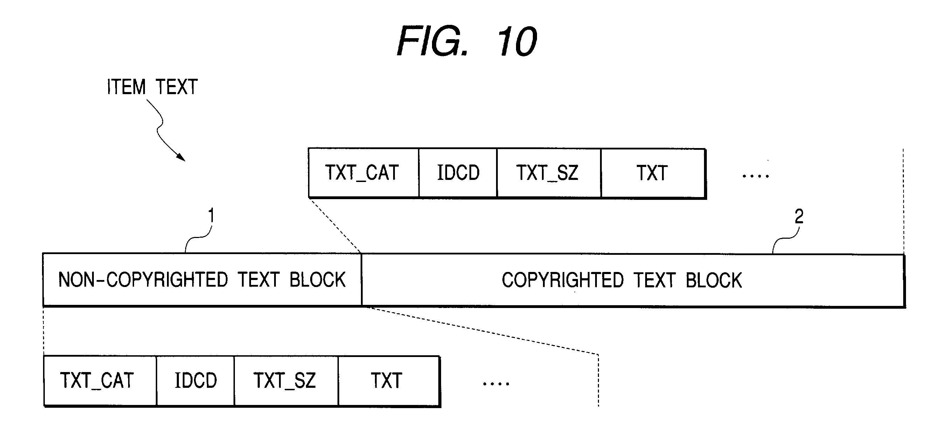

Fig. 10 shows a specific example of the item-text structure (IT_TXT structure), that is, the structural details of one information piece indicating one item text IT_TXT. In Fig. 10, one IT_TXT information piece is divided into a first block 1 for non-copyrighted texts and a second block 2 for copyrighted texts. Preferably, the non-copyrighted text block 1 precedes the copyrighted text block 2 as viewed in the normal scanning direction. Each of the non-copyrighted text block 1 and the copyrighted text block 2 is loaded with a data segment representing a text category (the category of a related text or texts) TXT_CAT, and a group or sequential groups assigned to a related text or texts respectively. The TXT_CAT data segment occupies a block header place, and is followed by the text-related group or groups. Thus, the TXT_CAT data segment forms a header of the non-copyrighted text block 1 or the copyrighted text block 2. Each text-related group in the non-copyrighted text block 1 or the copyrighted text block 2 has a first data segment representing an ID code word IDCD for the related text, a second data segment representing a text size (the size of the related text) TXT_SZ, and a third data segment representing the related text TXT. The IDCD data segment, the TXT_SZ data segment, and the TXT data segment are successively arranged in that order. Accordingly, a post-header portion of each of the non-copyrighted text block 1 and the copyrighted text block 2 has a data-segment arrangement as "IDCD, TXT_SZ, TXT, IDCD, TXT_SZ, TXT, ···" This portion of each of the non-copyrighted text block 1 and the copyrighted text block 2 may be in a form similar to one of the forms in Figs. 3, 4, and 5 or similar to a combination of at least two of the forms in Figs. 3, 4, and 5.

The non-copyrighted text block 1 may be omitted from one information piece indicating one item text IT_TXT. The copyrighted text block 2 may be omitted from one information piece indicating one item text IT_TXT.

In the case where a non-copyrighted text is inputted by a user and a copyrighted text is fed by an EMD-based contents provider, it is preferable that the indication of the non-copyrighted text on a disc-player display takes precedence over the indication of the copyrighted text thereon, and that the recording of the non-copyrighted text is executed before the recording of the copyrighted text. Accordingly, it is preferable that as shown in Fig. 10, the non-copyrighted text block 1 precedes the copyrighted text block 2 in the order of recording the blocks 1 and 2.

Generally, audio data representing tunes and recorded on the DVD-AR disc are accompanied with text data indicative of the names of the tunes. In other words, the audio contents representing tunes and recorded on the DVD-AR disc are accompanied with texts indicative of the names of the tunes. Texts may represent words in the tunes or other matters relating to the tunes. Preferably, information pieces indicating item texts IT_TXT are assigned to tunes respectively. ID code words in each item text IT_TXT are assigned to an main audio genre and a sub audio genre to which a related tune belongs, respectively. For example, the main audio genre is selected from "pops", "rock-and-roll", "jazz", "fusion", "classical", and others. For example, when the main audio genre is "classical", the sub audio genre is selected from "symphony", "concerto", "chamber music", "piano solo", and others.

Preferably, an ID code word for a text indicative of a tune name occupies a former place in the non-copyrighted text block 1 or the copyrighted text block 2 which immediately follows the place of a text category TXT_CAT. This designing is convenient to a reproducing device (disc player). To protect the contents of the copyrighted text block 2, it is preferable to encrypt the copyrighted text block 2.

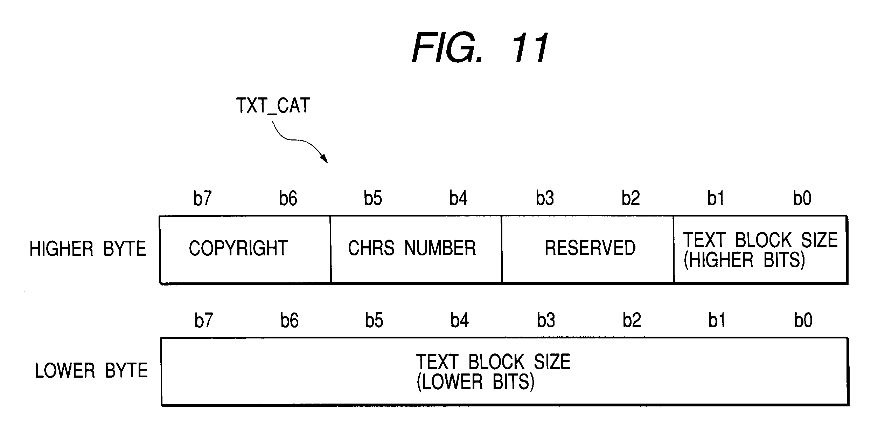

Fig. 11 shows a specific example of the details of one data segment representing one text category TXT_CAT in Fig. 10. With reference to Fig. 11, one TXT_CAT data segment is composed of 2 bytes, that is, a higher byte (8 higher bits b7, b6, b5, b4, b3, b2, b1, and b0) and a lower byte (8 lower bits b7, b6, b5, b4, b3, b2, b1, and b0). The bits b7 and b6 in the higher byte are loaded with copyright-related data (a copyright-related flag). The bits b5 and b4 in the higher byte are loaded with data representing an ID number for a designated character code set which is also referred to as a CHRS number. The bits b1 and b0 in the higher byte, and the bits b7-b0 in the lower byte are loaded with data representing the size of a related text block (a non-copyrighted text block 1 or a copyrighted text block 2).

The copyright-related data (copyright-related flag) in Fig. 11 are in a state which can be selected from a first predetermined state "00b" and a second predetermined state " 10b". The first predetermined state "00b" is assigned to the condition that a related text or texts are non-copyrighted. The second predetermined state " 10b" is assigned to the condition that a related text or texts are copyrighted. Accordingly, the copyright-related data (copyright-related flag) are "00b" in a non-copyrighted text block 1. On the other hand, the copyright-related data (copyright-related flag) are " 10b" in a copyrighted text block 2.

The CHRS number in Fig. 11 can be selected from a first predetermined number CHRS# 1 and a second predetermined number CHRS#2. The first and second predetermined numbers CHRS#1 and CHRS#2 are assigned to different character code sets, respectively. For example, the first predetermined number CHRS#1 is assigned to a character code set "IS0646" while the second predetermined number CHRS#2 is assigned to a character code set "Music Shift JIS Kanji". Here, "Kanji" means "Chinese character".

Thus, in the text data manager TXTDT_MG, at most two different character code sets can be used. The CHRS number in each of the non-copyrighted text block 1 and the copyrighted text block 2 designates which of the two character code sets is used therein. It should be noted that three or more different character code sets may be used in the text data manager TXTDT_MG. Furthermore, it should be noted that the TXT_CAT data segment in each of the non-copyrighted text block 1 and the copyrighted text block 2 may be modified to directly designate which of the character code sets is used therein.

As understood from the above explanation, a character code set can be designated for each of a non-copyrighted text block 1 and a copyrighted text block 2 in every item text IT_TXT. This designing enables below-mentioned operation aspects to be provided.

According to a first operation aspect, the character code set "Music Shift JIS Kanji" is designated for non-copyrighted texts inputted by a user, and the non-copyrighted texts expressed by the character code set "Music Shift JIS Kanji" are placed in a non-copyrighted text block 1. On the other hand, the character code set "ISO646" is designated for copyrighted texts accompanying tunes downloaded from an EMD site, and the copyrighted texts expressed by the character code set "ISO646" are placed in a copyrighted text block 2. Thus, the recorded non-copyrighted texts are expressed by the character code set "Music Shift JIS Kanji" while the recorded copyrighted texts are expressed by the character code set "ISO646"

According to a second operation aspect, the character code set "Music Shift JIS Kanji" is designated for non-copyrighted texts, and the non-copyrighted texts expressed by the character code set "Music Shift JIS Kanji" are placed in a non-copyrighted text block 1. Also, the character code set "Music Shift JIS Kanji" is designated for copyrighted texts accompanying tunes downloaded from an EMD site, and the copyrighted texts expressed by the character code set "Music Shift JIS Kanji" are placed in a copyrighted text block 2. Thus, the recorded non-copyrighted texts and also the recorded copy-righted texts are expressed by the character code set "Music Shift JIS Kanji".

According to a third operation aspect, the character code set "ISO646 is designated for non-copyrighted texts accompanying English tunes, and the non-copyrighted texts expressed by the character code set "ISO646 are placed in a non-copyrighted text block 1. Also, the character code set "IS0646" is designated for copyrighted texts accompanying tunes downloaded from an EMD site, and the copyrighted texts expressed by the character code set "ISO646" are placed in a copyrighted text block 2. Thus, the recorded non-copyrighted texts and also the recorded copyrighted texts are expressed by the character code set "ISO646"

It should be noted that a portion of each of the non-copyrighted text block 1 and the copyrighted text block 2 which follows the related the TXT_CAT data segment may be of a data structure similar to that disclosed in Japanese patent application publication number P2002-133830A. Furthermore, it should be noted that the TXT_CAT data segment may have a structure different from that of Fig. 11.

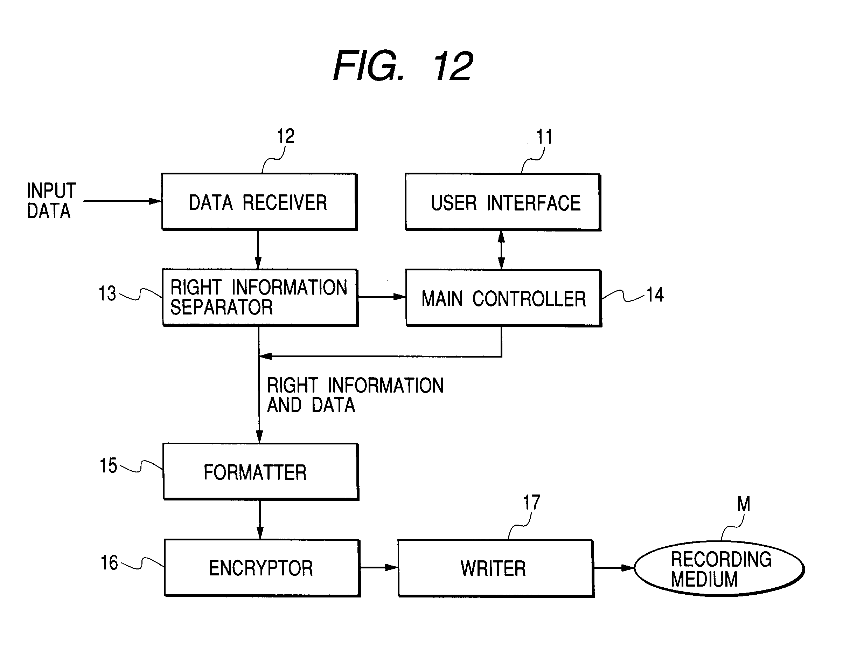

Fig. 12 shows a text-data recording apparatus according to the embodiment of this invention. The apparatus of Fig. 12 is designed to record text data or a set of text data and audio data on a DVD-AR disc. The apparatus of Fig. 12 includes a user interface 11, a data receiver 12, a right-information separator 13, a main controller 14, a DVD-AR formatter 15, a copyright-protecting encryptor 16, and a writer 17. The apparatus of Fig. 12 can be formed by a personal computer.

The user interface 11 can be actuated by a user. The data receiver 12 can receive data from an external such as the Internet or a digital interface. The main controller 14 includes a microcomputer, a digital signal processor, or a similar device which has a combination of an input/ output port, a processing section, a ROM, and a RAM. The main controller 14 operates in accordance with a control program stored in the ROM or the RAM. The control program is designed to enable the main controller 14 to implement operation steps mentioned later. The writer 17 can access a recording medium M including a DVD-AR disc. The device 17 can write data, information, and signals on the recording medium M.

Operation of the apparatus of Fig. 12 can be in a first recording mode for a copyrighted text. When the recording of copyrighted data is requested, a user actuates the user interface 11 accordingly so that a recording-start command is sent from the user interface 11 to the main controller 14. The main controller 14 starts the first recording mode of operation of the apparatus in response to the recording-start command. Specifically, the main controller 14 instructs the data receiver 12 to receive data from an external such as the Internet or a digital interface. The data receiver 12 sends the received data to the right-information separator 13. The right-information separator 13 divides the received data into right information and contents-representing data. The right information includes a first portion representing whether or not related contents indicated by the contents-representing data are provided with a copyright. The right information also includes a second portion representing a right-related prescription or prescriptions concerning the contents indicated by the contents-representing data. The contents-representing data include audio data and text data. Thus, the first portion of the right information represents whether or not the text data are provided with a copyright. The right-information separator 13 sends the right information to the main controller 14. The main controller 14 analyzes the right information. During the analyzation of the right information, the main controller 14 decides whether or not the text data are provided with a copyright.

The right-information separator 13 sends the contents-representing data (the audio data and the text data) to the DVD-AR formatter 15. It should be noted that the contents-representing data may be transferred from the right-information separator 13 to the DVD-AR formatter 15 via the main controller 14. It is preferable that the audio data are directly sent from the right-information separator 13 to the DVD-AR formatter 15 while the text data are transferred from the right-information separator 13 to the DVD-AR formatter 15 via the main controller 14. Preferably, for each copyrighted text block 2 (or each non-copyrighted text block 1), the main controller 14 generates a data piece representative of whether or not related texts are provided with a copyright, a data piece representative of a CHRS number, and a data piece representative of a size of the block 2 in response to the right information and the text data. These data pieces will be set as a text category TXT_CAT. Furthermore, the main controller 14 generates IDCD data segments and TXT_SZ data segments in response to the right information and the text data. The IDCD data segments represent the ID code words for related texts respectively. The TXT_SZ data segments represent the sizes of the related texts respectively.

After the analyzation of the right information is completed, the main controller 14 sends the TXT_CAT data pieces, the IDCD data segments, and the TXT_SZ data segments to the DVD-AR formatter 15. The TXT_CAT data pieces and the IDCD data segments form right information transferred from the main controller 14 to the DVD-AR formatter 15. The main controller 14 may also send the text data to the DVD-AR formatter 15. The DVD-AR formatter 15 implements the formatting as follows. The DVD-AR formatter 15 makes the audio data, the text data, the TXT_CAT data pieces (right information), the IDCD data segments, and the TXT_SZ data segments into file data of a predetermined format corresponding to the DVD-AR format mentioned with reference to Figs. 9-11. In other words, the DVD-AR formatter 15 combines the audio data, the text data, the TXT_CAT data pieces (right information), the IDCD data segments, and the TXT_SZ data segments into composite data of a predetermined format corresponding to the DVD-AR format. Accordingly, the DVD-AR formatter 15 makes the text data, the TXT_CAT data pieces, the IDCD data segments, and the TXT_SZ data segments into the item-text structure (IT_TXT structure) in Figs. 10 and 11. The DVD-AR formatter 15 sends the formatting-resultant data, which include the audio data and the IT_TXT data (right information and text data), to the copyright-protecting encryptor 16.

Preferably, the copyright-protecting encryptor 16 encrypts at least part of the formatting-resultant data according to a prescribed copyright-protecting scheme. Specifically, the device 16 encrypts at least part of the IT_TXT data. For example, the device 16 encrypts only each copyrighted text block 2 in the IT_TXT data, and does not encrypt each non-copyrighted text block 1 therein. The copyright-protecting encryptor 16 outputs the encryption-resultant data to the writer 17. The copyright-protecting encryptor 16 may pass the formatting-resultant data to the writer 17 without processing them. The writer 17 records the output data from the copyright-protecting encryptor 16 on a recording medium M (a DVD-AR disc).

Operation of the apparatus of Fig. 12 can be in a second recording mode for a non-copyrighted text. The second recording mode of operation of the apparatus is started when a user actuates the user interface 11 to designate audio data corresponding to texts being an object to be recorded. Subsequently, the user actuates the user interface 11 to input texts into the apparatus. The user interface 11 sends data representative of the inputted texts to the main controller 14. For each non-copyrighted text block 1, the main controller 14 generates a data piece representative of whether or not the texts are provided with a copyright, a data piece representative of a CHRS number, and a data piece representative of a size of the block 1. These data pieces will be set as a text category TXT_CAT. Furthermore, the main controller 14 generates IDCD data segments and TXT_SZ data segments in response to the text data. The IDCD data segments represent the ID code words for the texts respectively. The TXT_SZ data segments represent the sizes of the texts respectively. The main controller 14 sends the TXT_CAT data pieces, the IDCD data segments, and the TXT_SZ data segments to the DVD-AR formatter 15. The main controller 14 also sends the text data to the DVD-AR formatter 15.

The DVD-AR formatter 15 implements the formatting as follows. The DVD-AR formatter 15 makes the text data, the TXT_CAT data pieces, the IDCD data segments, and the TXT_SZ data segments into the item-text structure (IT_TXT structure) in Figs. 10 and 11. The DVD-AR formatter 15 sends the formatting-resultant data (the IT_TXT data) to the copyright-protecting encryptor 16.

Preferably, the copyright-protecting encryptor 16 encrypts at least part of the formatting-resultant data according to the prescribed copyright-protecting scheme. Specifically, the device 16 encrypts at least part of the IT_TXT data. The copyright-protecting encryptor 16 outputs the encryption-resultant data to the writer 17. The copyright-protecting encryptor 16 may pass the formatting-resultant data to the writer 17 without processing them. The writer 17 records the output data from the copyright-protecting encryptor 16 on a recording medium M (a DVD-AR disc).

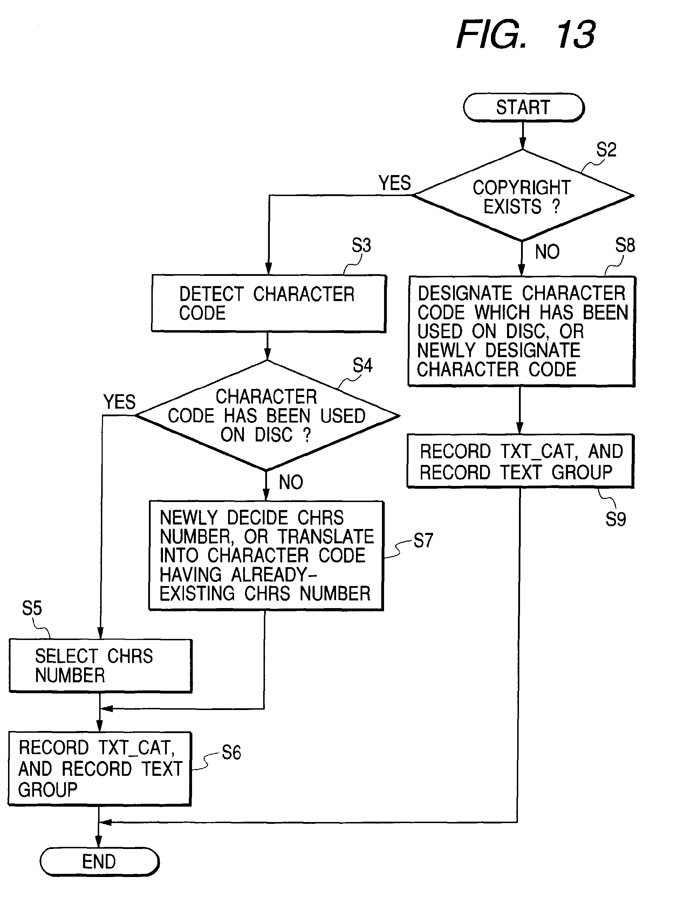

As previously mentioned, the main controller 14 operates in accordance with a control program stored in its internal ROM or RAM. Fig. 13 is a flowchart of a segment of the control program which relates to the recording of texts. The program segment in Fig. 13 is started in response to a recording-start command which is fed to the main controller 14 when a user actuates the user interface 11 accordingly.

As shown in Fig. 13, a first step S2 of the program segment decides whether or not texts to be recorded are provided with a copyright. This decision is made by, for example, analyzing right information fed from the right-information separator 13 and related to the texts or detecting whether the right information is present or absent. When the texts are provided with a copyright, the program advances from the step S2 to a step S3. Otherwise, the program advances from the step S2 to a step S8. Basically, the advance of the program from the step S2 to the step S3 corresponds to start of the previously-mentioned first recording mode of operation of the apparatus. On the other hand, the advance of the program from the step S2 to the step S8 corresponds to start of the previously-mentioned second recoding mode of operation of the apparatus.

The step S3 detects a character code set which expresses the texts. After the step S3, the program advances to a step S4.

The step S4 decides whether or not the detected character code set is the same as one used for texts represented by data which have already been recorded on a DVD-AR disc M, that is, whether or not the detected character code set corresponds to one of the first and second predetermined numbers CHRS#1 and CHRS#2. When the detected character code set is the same as one used for texts represented by data which have already been recorded on a DVD-AR disc M, that is, when the detected character code set corresponds to one of the first and second predetermined numbers CHRS# 1 and CHRS#2, the program advances from the step S4 to a step S5. Otherwise, the program advances from the step S4 to a step S7.

The step S5 selects the corresponding number CHRS#1 or CHRS#2 as a CHRS number in a text category TXT_CAT. After the step S5, the program advances to a step S6.

The step S7 checks the already-used character code sets, that is, the character code sets expressing the texts represented by the data which have already been recorded on the DVD-AR disc M. When there is only one already-used character code set and the first predetermined number CHRS# 1 corresponds thereto, the detected character code set is designated as new one having the second predetermined number CHRS#2. In this case, the inputted texts may be translated into a version expressed by the character code set having the second predetermined number CHRS#2. On the other hand, when there is only one already-used character code set and the second predetermined number CHRS#2 corresponds thereto, the detected character code set is designated as new one having the first predetermined number CHRS#1. In this case, the inputted texts may be translated into a version expressed by the character code set having the first predetermined number CHRS#1. One of the first and second predetermined numbers CHRS# 1 and CHRS#2 which corresponds to the newly-designated character code set is selected as a CHRS number in a text category TXT_CAT. In the presence of two already-used character code sets corresponding to the first and second predetermined numbers CHRS# 1 and CHRS#2, the step S7 translates the inputted texts into a version expressed by one of the two already-used character code sets. One of the first and second predetermined numbers CHRS# 1 and CHRS#2 which relates to the translation-resultant texts is selected as a CHRS number in a text category TXT_CAT. After the step S7, the program advances to the step S6.

The step S6 generates TXT_CAT data pieces which include a data piece representative of whether or not the texts are provided with a copyright, a data piece representative of the selected CHRS number, and a data piece representative of a size of a related copyrighted text block 2. Furthermore, the step S6 generates IDCD data segments, TXT_SZ data segments, and TXT data segments relating to the texts. The step S6 controls the DVD-AR formatter 15 to make the TXT_CAT data pieces, the IDCD data segments, the TXT_SZ data segments, and the TXT data segments into the item-text structure (IT_TXT structure) in Figs. 10 and 11. The step S6 controls the DVD-AR formatter 15 to output the resultant IT_TXT data to the copyright-protecting encryptor 16. The step S6 controls the copyright-protecting encryptor 16 to encrypts at least part of the IT_TXT data according to the prescribed copyright-protecting scheme. The step S6 controls the copyright-protecting encryptor 16 to output the encryption-resultant data to the writer 17. The step S6 may control the copyright-protecting encryptor 16 to pass the IT_TXT data to the writer 17 without processing them. The step S6 controls the writer 17 to record the output data from the copyright-protecting encryptor 16 on the DVD-AR disc M. After the step S6, the current execution cycle of the program segment ends.

The step S8 detects a character code set which expresses the texts. In addition, the step S8 checks the already-used character code sets, that is, the character code sets expressing the texts represented by the data which have already been recorded on the DVD-AR disc M. According to a first example, the step S8 designates one of the already-used character code sets. In this case, the inputted texts may be translated into a version expressed by the designated character code set. One of the first and second predetermined numbers CHRS#1 and CHRS#2 which corresponds to the designated character code set is selected as a CHRS number in a text category TXT_CAT. According to a second example, when there is only one already-used character code set and the first predetermined number CHRS# 1 corresponds thereto, the detected character code set is designated as new one having the second predetermined number CHRS#2. In this case, the inputted texts may be translated into a version expressed by the character code set having the second predetermined number CHRS#2. On the other hand, when there is only one already-used character code set and the second predetermined number CHRS#2 corresponds thereto, the detected character code set is designated as new one having the first predetermined number CHRS#1. In this case, the inputted texts may be translated into a version expressed by the character code set having the first predetermined number CHRS#1. One of the first and second predetermined numbers CHRS#1 and CHRS#2 which corresponds to the newly-designated character code set is selected as a CHRS number in a text category TXT_CAT.

A step S9 following the step S8 generates TXT_CAT data pieces which include a data piece representative of whether or not the texts are provided with a copyright, a data piece representative of the selected CHRS number, and a data piece representative of a size of a related non-copyrighted text block 1. Furthermore, the step S9 generates IDCD data segments, TXT_SZ data segments, and TXT data segments relating to the texts. The step S9 controls the DVD-AR formatter 15 to make the TXT_CAT data pieces, the IDCD data segments, the TXT_SZ data segments, and the TXT data segments into the item-text structure (IT_TXT structure) in Figs. 10 and 11. The step S9 controls the DVD-AR formatter 15 to output the resultant IT_TXT data to the copyright-protecting encryptor 16. The step S9 controls the copyright-protecting encryptor 16 to encrypts at least part of the IT_TXT data according to the prescribed copyright-protecting scheme. The step S9 controls the copyright-protecting encryptor 16 to output the encryption-resultant data to the writer 17. The step S9 may control the copyright-protecting encryptor 16 to pass the IT_TXT data to the writer 17 without processing them. The step S9 controls the writer 17 to record the output data from the copyright-protecting encryptor 16 on the DVD-AR disc M. After the step S9, the current execution cycle of the program segment ends.

Preferably, the step S9 decides whether or not a copyrighted text block 2 for a tune relating to a non-copyrighted text to be recorded has already been stored in an item text IT_TXT on the DVD-AR disc M. In the case where a copyrighted text block 2 has already been stored, the step S9 functions to place a corresponding non-copyrighted text block 1 in a head of the item text IT_TXT or in a position immediately preceding the copyrighted text block 2 on the DVD-AR disc M during the recording of the non-copyrighted text.

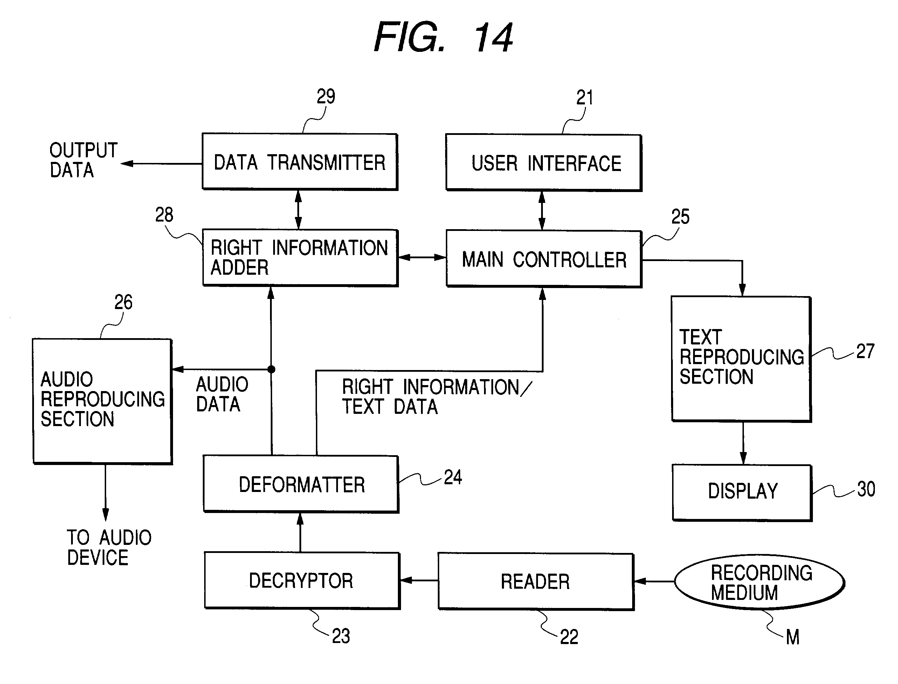

Fig. 14 shows a text-data reproducing apparatus according to the embodiment of this invention. The apparatus of Fig. 14 is designed to reproduce text data or a set of text data and audio data from a DVD-AR disc. The apparatus of Fig. 14 includes a user interface 21, a reader 22, a copyright-protecting decryptor 23, a DVD-AR deformatter 24, a main controller 25, an audio-data reproducing section 26, a text-data reproducing section 27, a right-information adder 28, a data transmitter 29, and a display 30. The apparatus of Fig. 14 can be formed by a personal computer.

The user interface 21 can be actuated by a user. The data transmitter 29 can transmit data to an external such as the Internet or a digital interface. The main controller 25 includes a microcomputer, a digital signal processor, or a similar device which has a combination of an input/output port, a processing section, a ROM, and a RAM. The main controller 25 operates in accordance with a control program stored in the ROM or the RAM. The control program is designed to enable the main controller 25 to implement operation steps mentioned later.

The reader 22 can access a recording medium M including a DVD-AR disc. The reader 22 can read data, information, and signals from the recording medium M.

The recording medium M stores file data or composite data of a predetermined format corresponding to the DVD-AR format mentioned with reference to Figs. 9-11. The file data or composite data contain audio data and IT_TXT data (right information and text data).

The apparatus of Fig. 14 operates as follows. When the reproduction of audio data and text data is requested, the user actuates the user interface 21 accordingly so that a reproduction-start command is sent from the user interface 21 to the main controller 25. In response to the reproduction-start command, the main controller 25 starts the apparatus operating in a reproducing mode. Specifically, the main controller 25 instructs the reader 22 to read out, from the recording medium M, file data containing requested audio data, requested text data, and related right information. The reader 22 outputs the readout file data to the copyright-protecting decryptor 23.

When the readout file data are of an encryption-resultant type, the copyright-protecting decryptor 23 decrypts the readout file data. The copyright-protecting decryptor 23 outputs the decryption-resultant data to the DVD-AR deformatter 24. When the readout file data are of a non-encrypted type, the copyright-protecting decryptor 23 passes the readout file data to the DVD-AR deformatter 24 as they are. The file data outputted from the copyright-protecting decryptor 23 include IT_TXT data containing at least one of a non-copyrighted text block 1 and a copyrighted text block 2 (see Fig. 10). The DVD-AR deformatter 24 converts the file data, which are outputted from the copyright-protecting decryptor 23, into an original format to get deformatting-resultant audio data, deformatting-resultant text data, and deformatting-resultant right information. The DVD-AR deformatter 24 feeds the deformatting-resultant text data and the deformatting-resultant right information to the main controller 25. The DVD-AR deformatter 24 feeds the deformatting-resultant audio data to the audio-data reproducing section 26. It should be noted that the DVD-AR deformatter 24 may feed the deformatting-resultant audio data to the right-information adder 28.

The main controller 25 detects a text category or categories TXT_CAT from the right information. The main controller 25 detects a designated character code set or sets by referring to the detected text category or categories TXT_CAT. The main controller 25 notifies the text-data reproducing section 27 of the designated character code set or sets. In addition, the main controller 25 sends the text data to the text-data reproducing section 27.

In the case where a plurality of detected text categories exist (that is, when IT_TXT data contain both a non-copyrighted text block 1 and a copyrighted text block 2), the main controller 25 may select one from them. In this case, the main controller 25 detects a designated character code set by referring to the selected text category TXT_CAT. The main controller 25 notifies the text-data reproducing section 27 of the designated character code set. In addition, the main controller 25 sends a portion of the text data, which corresponds to the designated character code set, to the text-data reproducing section 27.

The text-data reproducing section 27 decodes the text data into a text-indicating signal in response to the designated character code set or sets. The text-data reproducing section 27 outputs the text-indicating signal to the display 30. The display 30 indicates the text or texts represented by the output signal of the text-data reproducing section 27. Thus, the requested text data are indicated on the display 30.

The audio-data reproducing section 26 decodes the audio data into an audio signal. The audio-data reproducing section 26 outputs the audio signal to an audio device. The audio device converts the audio signal into corresponding sounds so that the playback of the requested audio data is implemented.

Preferably, the indication of the requested text data on the display 26 is executed at substantially the same time as the start of the playback of the requested audio data. To this end, the text data are temporarily stored in the RAM within the main controller 25 before being outputted to the text-data reproducing section 27 therefrom.

As previously mentioned, the DVD-AR deformatter 24 may feed the deformatting-resultant audio data to the right-information adder 28. In this case, the main controller 25 feeds the text data and the right information to the right-information adder 28. The right-information adder 28 combines the audio data, the text data, and the right information into composite data. The right-information adder 28 outputs the composite data to the data transmitter 29. The device 29 transmits the composite data to the external (for example, the Internet or the digital interface).

The recording apparatus of Fig. 12 and the reproducing apparatus of Fig. 14 may be combined into a recording and reproducing apparatus. The recording medium M may be replaced by a transmission medium. The previously-mentioned computer program for the recording of data and the previously-mentioned computer program for the reproduction of data may be downloaded via a transmission medium into a personal computer forming at least one of the recording apparatus of Fig. 12 and the reproducing apparatus of Fig. 14.

### Advantages Provided by the Invention

At least one of a copyrighted text and a non-copyrighted text can be recorded while the two texts are distinguished from each other.

To protect a copyrighted text, it is sufficient to encrypt only a corresponding copyrighted text block 2. In this case, it is possible to prevent the occurrence of an adverse affection on a non-copyrighted text block 1.

A reproduced text or texts are handled in the same way regardless of whether only one or both of a copyrighted text and a non-copyrighted text are recorded on a DVD-AR disc.

A character code set can be designated for each of a non-copyrighted text block 1 and a copyrighted text block 2 in an item text IT_TXT corresponding to one tune. Therefore, a copyrighted text and a non-copyrighted text can be expressed by at least one of two different character code sets.

## Claims

1. A text-data recording apparatus comprising:
first means for forming 1) first text data relating to audio data and being non-copyrighted, 2) a flag representing that the first text data are non-copyrighted, 3) an information piece representing a character code used for the first text data, and 4) an information piece representing a size of the first text data into a first text block;
second means for forming 1) second text data relating to the audio data and being copyrighted, 2) a flag representing that the second text data are copyrighted, 3) an information piece representing a character code used for the second text data, and 4) an information piece representing a size of the second text data into a second text block;
third means for generating an item text including at least one of the first and second text blocks generated by the first and second means;
fourth means for generating a text-data management structure including the item text generated by the third means; and
fifth means for recording the text-data management structure generated by the fourth means on an audio disc.

2. A text-data recording apparatus as recited in claim 1, further comprising means provided in the fifth means for recording the first text block before recording the second text block in cases where the item text includes both the first and second text blocks.

3. A text-data recording apparatus as recited in claim 1, further comprising means for encrypting the second text block into an encryption-resultant version, and means provided in the fifth means for recording the second text block of the encryption-resultant version on the audio disc.

4. An audio disc storing audio data and a text-data management structure recited in claim 1.

5. A method of recording text-data, comprising the steps of:
forming 1) first text data relating to audio data and being non-copyrighted, 2) a flag representing that the first text data are non-copyrighted, 3) an information piece representing a character code used for the first text data, and 4) an information piece representing a size of the first text data into a first text block;
forming 1) second text data relating to the audio data and being copyrighted, 2) a flag representing that the second text data are copyrighted, 3) an information piece representing a character code used for the second text data, and 4) an information piece representing a size of the second text data into a second text block;
generating an item text including at least one of the first and second text blocks;
generating a text-data management structure including the item text; and
recording the text-data management structure on an audio disc.

6. A computer program for recording text-data, comprising the steps of:
forming 1) first text data relating to audio data and being non-copyrighted, 2) a flag representing that the first text data are non-copyrighted, 3) an information piece representing a character code used for the first text data, and 4) an information piece representing a size of the first text data into a first text block;
forming 1) second text data relating to the audio data and being copyrighted, 2) a flag representing that the second text data are copyrighted, 3) an information piece representing a character code used for the second text data, and 4) an information piece representing a size of the second text data into a second text block;
generating an item text including at least one of the first and second text blocks;
generating a text-data management structure including the item text; and
recording the text-data management structure on an audio disc.

7. An apparatus for reproducing at least one of first and second text blocks from an audio disc recited in claim 4.

8. An apparatus comprising:
first means for deciding whether or not text data relating to audio data are copyrighted, and generating a first signal representing a result of said deciding;
second means for deciding a character code set expressing the text data, and generating a second signal representing the decided character code set;
third means for formatting 1) the text data, 2) the first signal generated by the first means, and 3) the second signal generated by the second means into a text-data management structure; and
fourth means for recording the text-data management structure generated by the third means on an audio-data recording disc.
